# EUROPEAN PATENT SPECIFICATION

(11) **EP 3 258 770 B1**
(45) Date of publication and mention of the grant of the patent: **14.10.2020**
(21) Application number: 16704638.2
(22) Date of filing: 16.02.2016
(51) Int. Cl.: A01D 34/416

(54) **COIL OF CUTTING WIRE FOR A VEGETATION CUTTING MACHINE HAVING A GROOVED INNER SURFACE**
SPULE AUS SCHNEIDDRAHT FÜR EINE VEGETATIONSSCHNEIDEMASCHINE MIT GERILLTER INNENFLÄCHE
BOBINE DE FIL DE COUPE POUR UNE MACHINE DE COUPE DE VÉGÉTATION PRÉSENTANT UNE SURFACE INTÉRIEURE RAINURÉE

(30) Priority: 16.02.2015 EP 15305226
(43) Date of publication of application: 27.12.2017
(73) Proprietor: Speed France S.A.S., 69400 Arnas (FR)
(72) Inventor: LEGRAND, Emmanuel, 01240 St-Germain-sur-Renon (FR)
(74) Representative: Regimbeau
(86) International application number: PCT/EP2016/053219
(87) International publication number: WO 2016/131799

(56) References cited:
- WO-A1-2014/020178
- DE-A1-102007 007 987
- DE-A1-102008 009 388
- US-A1- 2012 219 761

## Description

### FIELD OF THE INVENTION

The invention relates to a coil of cutting wire for a vegetation cutting machine, a cutting assembly comprising a cutting head and such a coil, and a process of manufacturing such a coil.

### BACKGROUND OF THE INVENTION

Self-supporting coils of cutting wire for vegetation cutting machines are of great interest since they render the insertion and/or replacement of the wire in a cutting head very easy.

In the present text, "self-supporting" means that the wire is capable of remaining coiled on itself, without any holding means external thereto. It is therefore not necessary to lock the turns of the coil by a binding surrounding its turns so as to hold them adjacent, nor by packaging adjusted to the dimensions and format of the coil.

The locking of the turns is temporary, i.e. intended to be effective during storage and shipment of the coil, until its insertion into the cutting head; however, the turns are separable under the effect of a pulling force exerted on the free end of the wire.

Document FR 2 967 548 discloses such a self-supporting coil, which is made of a wire having reciprocal retention provisions such that, when the wire is wound upon itself, each turn cooperates with at least one adjoining turn so as to retain it mechanically.

This wire therefore makes it possible in particular to make a self-supporting coil having a flat shape with a central void.

Such a self-supporting coil can be advantageously used in combination with a cutting head as described in document WO 2014/020178. Said cutting head includes:
- a body defining an inner recess for the coil and provided with a peripheral opening for extending a length of cutting wire separated from the coil, and capable of being driven in rotation by a motor, and
- a central mandrel adapted to support said at least one coil, said mandrel comprising at least one arrangement adapted to cooperate with the coil so as to ensure rotational engagement between the mandrel and the coil, the mandrel being able to turn selectively relative to the body.

When a user wants to insert the self-supporting coil in the cutting head, he merely has to open the cutting head, arrange the central void of the coil around the mandrel, reel off a given length of the wire to extend from the peripheral opening, and close the cutting head. Document DE 10 2007 007987 A1 discloses a coil of cutting wire for a vegetation cutting machine.

### BRIEF DESCRIPTION OF THE INVENTION

A goal of the invention is to improve the rotational engagement of the coil with the central mandrel.

Accordingly, the invention provides a coil of cutting wire for a vegetation cutting machine, wherein the wire is coiled on itself about an axis so as to form at least two temporarily bonded turns and a central void, wherein the surface of the wire portion forming the innermost turn of the coil facing the central void comprises a plurality of grooves creating a succession of protrusions and recesses extending parallel to said axis.

According to an embodiment, the innermost turn is permanently welded to at least a part of the most adjacent turn.

Preferably, the coil has a flat shape.

Advantageously, the wire is made of a material comprising a polyamide and/or a copolyamide.

The cross section of the wire typically has an area equal to the cross-section of a round wire having a diameter comprised between 1.35 and 4 mm.

According to an embodiment, the turns are temporarily bonded by reciprocal retention arrangements formed on the wire such that each turn mechanically retains at least one adjacent turn.

According to an embodiment, the turns are temporarily bonded by adhesion.

According to an embodiment, the turns are temporarily bonded by controlled partial fusion of the material of the wire.

According to an embodiment, the coil comprises a plurality of temporarily bonded turns of at least two cutting wires, in particular between four and six cutting wires, bonded longitudinally in a separable fashion.

Another object of the invention is a cutting assembly for a vegetation cutting machine such as a border trimmer or a brush cutter, said assembly comprising a coil as described above and a cutting head and a cutting head comprising:
- a body defining an inner recess for the coil and provided with a peripheral opening for the emergence of a length of cutting wire separated from the coil, and capable of being driven in rotation by a motor, and
- a central mandrel for supporting said at least one coil, said mandrel comprising at least one arrangement adapted to cooperate with the grooves of the coil so as to ensure rotational engagement between the mandrel and the coil, the mandrel being able to selectively rotate relative to the body.

Another object of the invention is a process of manufacturing a coil of cutting wire for a vegetation cutting machine, characterized it comprises the following steps:
- providing a cutting wire,
- winding the wire on itself about an axis so as to form at least two temporarily bonded turns and a central void,
- forming a plurality of grooves parallel to said axis on the surface of the innermost turn facing the central void.

Advantageously, the forming step comprises applying heat to the innermost turn of the coil.

According to an embodiment, the forming step further comprises welding the innermost turn to an adjacent turn.

### BRIEF DESCRIPTION OF THE DRAWINGS

Other features and advantages of the invention will be apparent from the detailed description that follows, based on the appended drawings wherein:
- FIG. 1 is a top view of a coil of cutting wire as described in document FR 2 967 548, and which may be a starting product for the manufacturing process of the coil according to the invention,
- FIG. 2 is a top view of a coil according to an embodiment of the invention;
- FIG. 3 is a top view of a coil according to another embodiment of the invention;
- FIG. 4 is a perspective view of a cutting head that may be used in combination with a coil according to the invention;
- FIG. 5 is a perspective view of a coil according to a further embodiment of the invention,
- FIG. 6 is a cross-sectional view of a cutting wire according to an embodiment of the invention,
- FIG. 7 is a perspective view of a coil according to another embodiment of the invention,
- FIG. 8 is a perspective view of a mandrel of a cutting head adapted to cooperate with the coil of FIG. 7.

### DETAILED DESCRIPTION OF EMBODIMENTS OF THE INVENTION

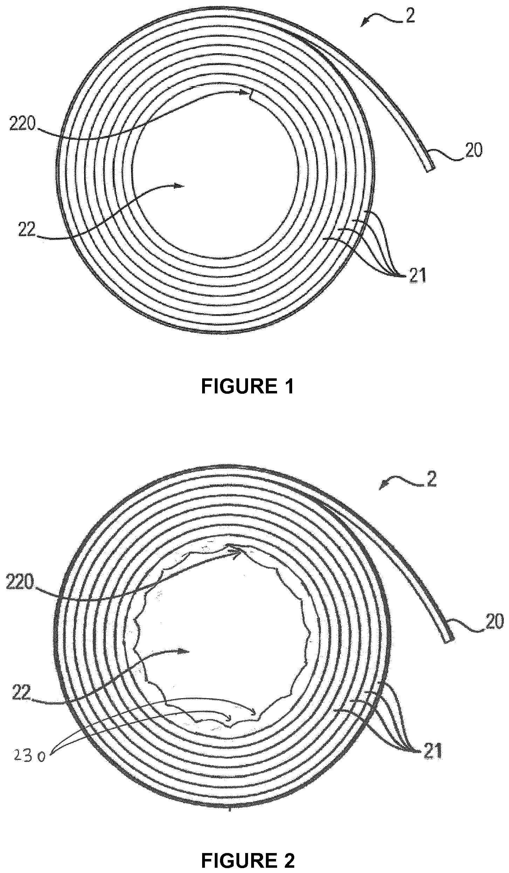

As illustrated in FIG. 1, a cutting wire 20 is coiled on itself so as to form a self-supporting coil 2 whose turns are temporarily bonded.

By "temporarily bonded" is meant that the bonding strength of the turns is sufficient to have a self-supporting coil, but that the turns can be separated without damaging the wire under the effect of a pulling force exerted on the free end of the wire in view of reeling off a given length of the wire.

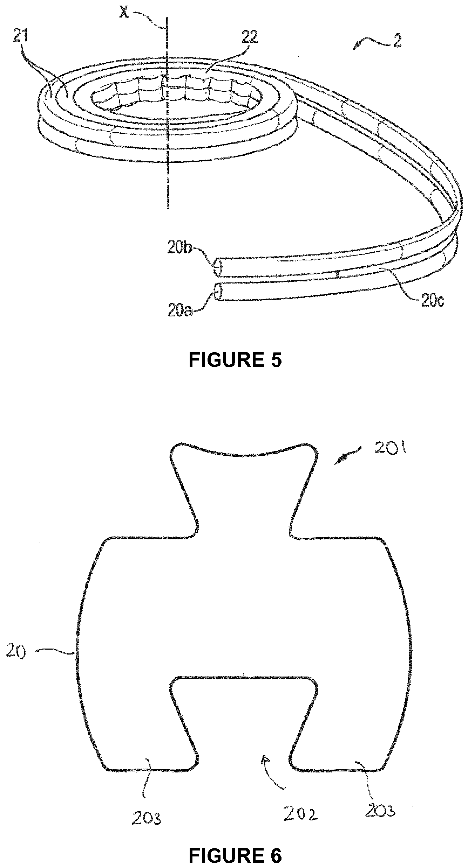

According to an embodiment, the wire 20 may comprise reciprocal retention arrangements (see FIG. 6) so that each turn 21 cooperates with at least one adjacent turn 21 so as to hold it mechanically, so as to make the coil 2 self-supporting. It is to be noted that FIG. 6 illustrates only one possible embodiment of the cutting wire, whereas the invention covers all forms of retention arrangements adapted to cooperate together mechanically in order to hold the turns of the coil in position, preferably by elastic and/or plastic deformation of the arrangements. One may refer in this regard to the embodiments described in document FR 2 967 548.

According to an embodiment, the reciprocal retention arrangements comprise a male element 201 and a female element 202 extending over all or part of the length of the wire 20, the male element 201 being adapted to penetrate the female element 202 when the wire 20 is coiled on itself so as to form a coil that may be either substantially flat, substantially cylindrical or substantially conical. Advantageously, the female and male elements are chosen so that the wire can be produced by conventional drawing/extrusion techniques.

For example, the male element may be a rib 201 extending over all or part of the length of the wire, while the female element 202 may be a groove extending so as to match the rib. If it is intended to form a flat coil, the rib 201 and the groove 202 preferably extend on opposite longitudinal sides of the wire. In general terms, the shape and dimensions of the rib 201 are adjusted to the shape and dimensions of the groove 202, so that the rib 201 can fit and be held with a suitable force in the groove 202 of an adjacent turn when the wire 20 is coiled on itself so as to form the coil. Preferably, the shape and dimensions of the rib 201 and groove 202 are chosen so that the rib 201 forcibly penetrates the groove 202 in the adjacent turn, with elastic deformation of the wire in the areas 203, when the wire 20 is coiled on itself. In this case, the elastic return of the material of the wire in these areas 203 ensures the holding of the rib 201 and groove 202 once engagement has been effected.

Alternatively, the turns can be temporarily bonded together by adhesion (for example by means of a chemical or thermal adhesive deposited continuously or discontinuously) between the turns, by localized partial fusion of the material of the cutting wire between two adjoining turns; by ultrasonic or friction welding. In this regard, one may refer to the techniques described in document US 4,024,635.

Any other temporary connection means, that is allowing the turns to be held then separated without damaging the cutting wire, can be used without thereby departing from the scope of the present invention.

A first end 220 of the wire is located within the inner void of the coil, while the second end is a free end designed to emerge from the cutting head.

The cutting wire is made by extrusion of a thermoplastic material through a die defining, if appropriate, the shape of the reciprocal retention arrangements.

The thermoplastic material typically comprises a polyamide and/or a copolyamide.

The cutting wire may be made by coextrusion of two or more different thermoplastic materials, e.g. a first material forming a core of the cutting wire and a second material forming a sheath surrounding at least partially the core.

The cross section of the wire has an area equal to the cross-section of a round wire having a diameter comprised between 1.35 and 4 mm, preferably between 1.35 and 2 mm.

The cross section may have any suitable shape providing sufficient contact surfaces between adjacent turns so as to allow a temporary bonding of the turns by adhesion, welding, or mechanical retention. For example, the cross section of the wire may be circular or have any convex polygonal shape (e.g. square, rectangular, triangular, hexagonal, etc.), or be inscribed in one of such shapes.

Once the cutting wire has been wound around an axis (which is here perpendicular to the plane of FIG. 1) to form the self-supporting coil, a plurality of grooves 230 parallel to the axis is formed on the surface of the wire portion forming the innermost turn facing the central void 22 (see FIG. 2). As will be explained below with reference to FIG. 5, this axis corresponds to the axis of rotation of the mandrel of the cutting head onto which the coil is received.

The formation of the grooves 230 is typically carried out by heating the innermost turn and by exerting a force radially outwards with a suitable tool, so as to deform the material of the wire. During this operation, the first end 220 of the cutting wire may also be pressed onto the adjacent turn and adopt a flattened shape.

The grooves may have a round or angular cross section.

Preferably, the grooves are evenly distributed over the perimeter of the central void.

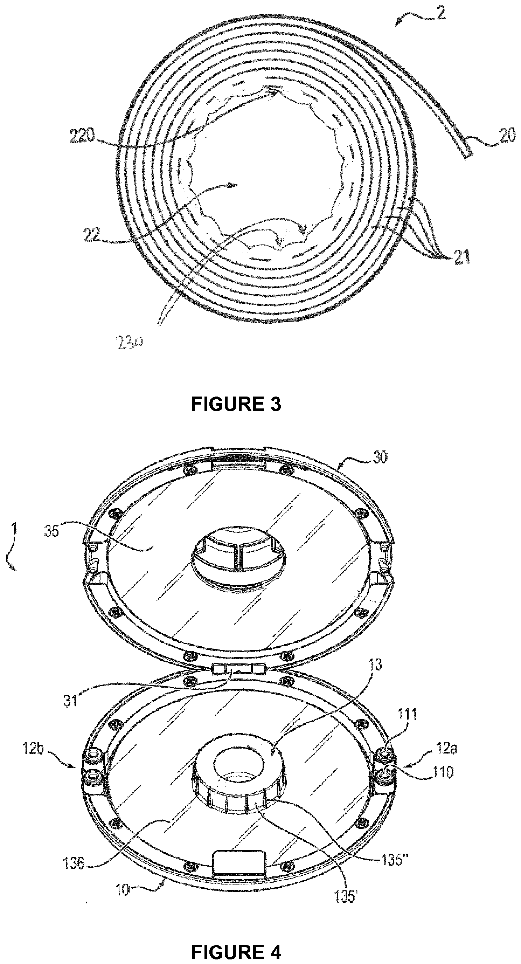

Advantageously, the grooves are designed so as to fit corresponding ribs formed on the central mandrel of the cutting head. In this way, the shape of the central void can be adjusted to the external shape of the mandrel. For example, in the case of a cutting head having a mandrel comprising a plurality of ribs (see FIG. 4), the same number of grooves can be created in the innermost turn of the coil so as to cooperate with the ribs and thus improve the rotational engagement between the mandrel and the coil.

According to an embodiment illustrated in FIG. 3, the formation of the grooves may further result in welding at least partially the innermost turn and the directly adjacent turn. This may be advantageous in that the welding prevents any relative sliding of the turns and thus avoids that the coil tightens around the mandrel due to the centrifugal force. This welding is represented by a dotted line in FIG. 3. As compared to the temporary bonding that holds the adjacent turns together, such a welding of the innermost turn and the directly adjacent turn is advantageously permanent, i.e. these turns are not capable of being separated under the conditions that allow separating the other, temporarily bonded, turns.

According to an embodiment illustrated in FIG. 5, the coil consists of a plurality of temporarily bonded turns of at least two cutting wires 20a, 20b bonded longitudinally in a separable fashion. In such case, the wires are provided in the form a ribbon wherein the wires are longitudinally bonded in separable fashion, as described for example in document EP 0 435 795. The axis X designates the rotation axis of the cutting head. The connection between the two wires 20a, 20b, for example, is obtained by extrusion of a film 20c of the same material as the wires during manufacture of said ribbon. Said film 20c is thin enough to be torn for the purpose of separating the wires 20a, 20b over a certain length. The ribbon is then being wound to form the turns, the turns 21 being temporarily bonded by the reciprocal retention arrangements. In other words, the coil has two temporary connections: one between the two wires 20a, 20b over their length; the other between adjoining turns. Then, the surface of the innermost turn of each wire is shaped so as to form a plurality of grooves (and optionally weld the innermost turn to the directly adjacent turn) as already described above.

FIG. 4 illustrates an overview of an open cutting head that may be used in combination with the coil according to the invention.

The coil 2 is set in a recess provided in a body 10 of the cutting head 1. A cover 30 intended to be secured to the body 10 closes the recess. In the embodiment illustrated in FIG. 4, the body and cover are linked by a hinge 31 and further secured by screws (not shown) but this is not intended to be limitative. For example, the cover and body could be secured only by screws.

The body 10 includes at least one opening 12a, 12b which opens into the recess in order to allow the emergence of a length of cutting wire separated from the coil. The openings 12a, 12b are preferably evenly distributed circumferentially; for example, if the openings are two in number, they are advantageously diametrically opposite. Naturally, if more wires are to be used in the cutting head, a sufficient number of openings will be provided.

Moreover, all the openings are not necessarily arranged on the body 10 as illustrated in FIG. 4; the openings can in fact be distributed both on the cover 30 and on the body 10, for example.

According to an embodiment, the inner and outer walls of the recess exhibit, on either side of the opening, a rounded end 110, 111 serving as an abutment surface for the wire during rotation of the cutting head, which limits the risk of breakage at the eyelet, that is breakage of the wire at the opening 12.

The coil is accommodated in the recess on a central mandrel 13 comprising, on its outer surface 135', a plurality of ribs 135". The innermost turn of the coil comprising grooves corresponding to the ribs, the mandrel 13 and the coil are thereby in rotational engagement.

The mandrel 13 is positioned so as to turn selectively relative to the body 10. What is meant by selectively is that in normal operation of the cutting head, that is when it is driven in rotation by the motor of the cutting machine for the purpose of cutting vegetation, the mandrel 13 is fixed with respect to the body 10, and that it is caused to turn with respect to the body 10 only by an action from a user.

According to an embodiment, the mandrel 13 comprises a supporting plate 136 that extends radially from the peripheral surface 135' and that supports the coil 2. Because of the strain generated during use of the cutting head, the mandrel and the supporting plate are advantageously made of metal. Preferably, the supporting plate is not smooth but instead has a surface having a certain roughness that prevents the coil from sliding. For example, said surface may consist in an increased roughness of the supporting plate 136, or barbs regularly distributed on the surface. In an alternative or complementary way, the supporting plate may be pierced with a plurality of circular holes, distributed according to one or several concentric circles around the axis of rotation of the mandrel 13. Indeed, when the supporting plate 136 is being pierced, the metal that is pushed aside forms around each hole barbs that extend beyond the surface of the plate 136 and that exert a retaining function of the coil. The supporting plate 136 may thus be pierced with a first series of holes distributed along a first circle close to the mandrel 13, and a second series of holes distributed along a second circle close to the periphery of the plate 136.

According to an advantageous embodiment, the cutting head may further comprise a pressuring plate 35 arranged in the cover 30 against a spring (not shown), opposite to the supporting plate 136. Said pressuring plate 35 is intended to be in contact with the coil and, due to the force of the spring, exert a pressure onto the coil when it is in working position within the head. This allows maintaining the coil in a flat position between the supporting plate 136 and the pressuring plate 35, which in turn promotes a better rotational engagement of the coil and the mandrel.

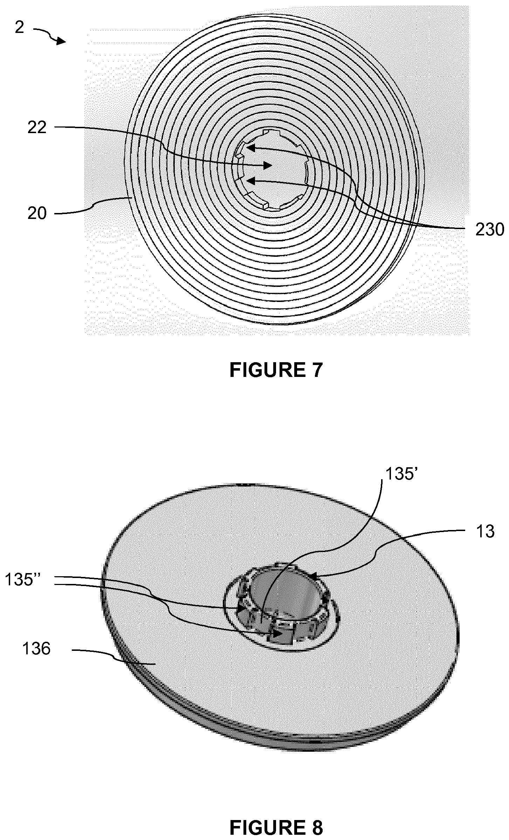

FIG. 7 and FIG. 8 respectively show an alternative embodiment of a coil and a mandrel adapted to cooperate with said coil.

The outer surface 135' of the mandrel 13, which is cylindrical, is provided with a plurality of protrusions 135" extending radially. Each protrusion extends along the height of the mandrel and comprises two edges that are substantially parallel to the axis of rotation of the mandrel and an outer surface shaped as a portion of a cylinder.

The protrusions 135" are advantageously evenly distributed over the outer surface 135' of the mandrel.

As shown in FIG. 7, the surface of the innermost turn of the coil is provided with a shape complementary to the outer shape of the mandrel 13. In particular, the surface of the innermost turn of the coil is provided with grooves 220 that fit the protrusions 135" of the mandrel 13. Advantageously, the grooves 220 are separated by protrusions that fit the surface 135' of the mandrel.

Of course, the coil and mandrel could be provided with different shapes ensuring rotational engagement thereof without departing from the scope of the appended claims.

### REFERENCES

FR 2 967 548
WO 2014/020178
US 4,024,635
EP 0 435 795

## Claims

1. Coil (2) of cutting wire for a vegetation cutting machine, wherein the wire (20) is coiled on itself about an axis so as to form at least two temporarily bonded turns (21) and a central void (22), **characterized in that** the surface of the wire portion forming the innermost turn of the coil facing the central void (22) comprises a plurality of grooves (230) creating a succession of protrusions and recesses extending parallel to said axis.

2. Coil according to claim 1, wherein the innermost turn is permanently welded to at least a part of the most adjacent turn.

3. Coil according to one of claims 1 to 2, wherein the coil (2) has a flat shape.

4. Coil according to one of claims 1 to 3, wherein the wire (20) is made of a material comprising a polyamide and/or a copolyamide.

5. Coil according to one of claims 1 to 4, wherein the cross section of the wire (20) has an area equal to the cross-section of a round wire having a diameter comprised between 1.35 and 4 mm.

6. Coil according to one of claims 1 to 5, wherein the turns are temporarily bonded by reciprocal retention arrangements (201, 202) formed on the wire (20), such that each turn (21) mechanically retains at least one adjacent turn.

7. Coil according to one of claims 1 to 5, wherein the turns (21) are temporarily bonded by adhesion.

8. Coil according to one of claims 1 to 5, wherein the turns (21) are temporarily bonded by controlled partial fusion of the material of the wire.

9. Coil according to one of claims 1 to 8, comprising a plurality of temporarily bonded turns of at least two cutting wires (20a, 20b) bonded longitudinally in a separable fashion.

10. Cutting assembly for a vegetation cutting machine such as a border trimmer or a brush cutter, said assembly including at least one coil (2) according to one of claims 1 to 9 and a cutting head (1) comprising:
- a body (10) defining an inner recess for the coil (2) and provided with a peripheral opening (12a, 12b) for the emergence of a length of cutting wire separated from the coil, and capable of being driven in rotation by a motor, and
- a central mandrel (13) for supporting said at least one coil, said mandrel comprising at least one arrangement (135") adapted to cooperate with the grooves (230) of the coil so as to ensure rotational engagement between the mandrel and the coil, the mandrel being able to selectively rotate relative to the body.

11. Process of manufacturing a coil (2) of cutting wire for a vegetation cutting machine, **characterized in that** it comprises the following steps:
- providing a cutting wire (20),
- winding the wire (20) on itself about an axis so as to form at least two temporarily bonded turns (21) and a central void (22),
- forming a plurality of grooves (230) creating a succession of protrusions and recesses parallel to said axis on the surface of the innermost turn facing the central void.

12. Process according to claim 11, wherein the forming step comprises applying heat to the innermost turn of the coil (2).

13. Process according to claim 12, wherein the forming step further comprises permanently welding the innermost turn to an adjacent turn.

## Patentansprüche

1. Rolle (2) Schneidedraht für eine Vegetationsschneidemaschine, wobei der Draht (20) um eine Achse zum Bilden von mindestens zwei temporär gebondeten Windungen (21) und einen zentralen Hohlraum (22) auf sich selbst aufgerollt ist, **dadurch gekennzeichnet, dass** die Oberfläche des Drahtabschnitts, der die innerste Windung der Rolle bildet, die dem zentralen Hohlraum (22) zugewandt ist, eine Vielzahl von Rillen (230) umfasst, die eine Folge von Vorsprüngen und Ausnehmungen, die sich parallel zu der Achse erstrecken, erzeugt.

2. Rolle nach Anspruch 1, wobei die innerste Windung an mindestens einen Teil der nächstliegenden Windung permanent angeschweißt ist.

3. Rolle nach einem der Ansprüche 1 bis 2, wobei die Rolle (2) eine flache Form aufweist.

4. Rolle nach einem der Ansprüche 1 bis 3, wobei der Draht (20) aus einem Material besteht, das ein Polyamid und/oder ein Copolyamid umfasst.

5. Rolle nach einem der Ansprüche 1 bis 4, wobei der Querschnitt des Drahts (20) eine Fläche aufweist, die mit dem Querschnitt eines runden Drahts mit einem Durchmesser zwischen 1,35 und 4 mm übereinstimmt.

6. Rolle nach einem der Ansprüche 1 bis 5, wobei die Windungen durch reziproke Rückhalteanordnungen (201, 202), die am Draht (20) gebildet sind, temporär gebondet sind, derart, dass jede Windung (21) mindestens eine benachbarte Windung mechanisch zurückhält.

7. Rolle nach einem der Ansprüche 1 bis 5, wobei die Windungen (21) durch Haftung temporär gebondet sind.

8. Rolle nach einem der Ansprüche 1 bis 5, wobei die Windungen (21) durch gesteuerte teilweise Fusion des Materials des Drahts temporär gebondet sind.

9. Rolle nach einem der Ansprüche 1 bis 8, die eine Vielzahl von temporär gebondeten Windungen von mindestens zwei Schneidedrähten (20a, 20b), die auf trennbare Weise in Längsrichtung gebondet sind, umfasst.

10. Schneideanordnung für eine Vegetationsschneidemaschine, wie etwa einen Randtrimmer oder einen Freischneider, wobei die Anordnung mindestens eine Rolle (2) nach einem der Ansprüche 1 bis 9 und einen Schneidekopf (1) umfasst, der Folgendes umfasst:
- einen Körper (10), der eine innere Ausnehmung für die Rolle (2) definiert und mit einer Umfangsöffnung (12a, 12b) zum Austreten einer Länge Schneidedraht, die von der Rolle getrennt ist, versehen ist und von einem Motor in Drehung angetrieben werden kann, und
- einen zentralen Dorn (13) zum Stützen der mindestens einen Rolle, wobei der Dorn mindestens eine Anordnung (135") umfasst, die angepasst ist, mit den Rillen (230) der Rolle zusammenzuwirken, um den Dreheingriff zwischen dem Dorn und der Rolle sicherzustellen, wobei der Dorn relativ zum Körper selektiv gedreht werden kann.

11. Verfahren zum Herstellen einer Rolle (2) Schneidedraht für eine Vegetationsschneidemaschine, **dadurch gekennzeichnet**, sie umfasst die folgenden Schritte:
- Bereitstellen eines Schneidedrahts (20),
- Wickeln des Drahts (20) um eine Achse zum Bilden von mindestens zwei temporär gebondeten Windungen (21) und einem zentralen Hohlraum (22) um sich selbst,
- Bilden einer Vielzahl von Rillen (230), die eine Folge von Vorsprüngen und Ausnehmungen parallel zur Achse auf der Oberfläche der innersten Windung, die dem zentralen Hohlraum zugewandt ist, erzeugt.

12. Verfahren nach Anspruch 11, wobei der Schritt des Bildens das Aufbringen von Wärme auf die innerste Windung der Rolle (2) umfasst.

13. Verfahren nach Anspruch 12, wobei der Schritt des Bildens ferner das permanente Schweißen der innersten Windung an eine benachbarte Windung umfasst.

## Revendications

1. Bobine (2) de fil de coupe pour une machine de coupe de végétation, dans laquelle le fil (20) est enroulé sur lui-même autour d'un axe afin de former au moins deux spires temporairement jointes (21) et un vide central (22), **caractérisée en ce que** la surface de la partie de fil formant la spire la plus à l'intérieur de la bobine faisant face au vide central (22) comprend une pluralité de rainures (230) créant une succession de saillies et l'évidements s'étendant parallèlement audit axe.

2. Bobine selon la revendication 1, dans laquelle la spire la plus à l'intérieur est soudée de manière permanente à au moins une partie de la spire la plus adjacente.

3. Bobine selon l'une des revendications 1 à 2, dans laquelle la bobine (2) a une forme plate.

4. Bobine selon l'une des revendications 1 à 3, dans laquelle le fil (20) est réalisé avec un matériau comprenant un polyamide et/ou un copolyamide.

5. Bobine selon l'une des revendications 1 à 4, dans laquelle la section transversale du fil (20) a une surface égale à la section transversale d'un fil arrondi ayant un diamètre compris entre 1,35 et 4 mm.

6. Bobine selon l'une des revendications 1 à 5, dans laquelle les spires sont temporairement jointes par des agencements de retenue réciproques (201, 202) formés sur le fil (20), de sorte que chaque spire (21) retient mécaniquement au moins une spire adjacente.

7. Bobine selon l'une des revendications 1 à 5, dans laquelle les spires (21) sont temporairement jointes par adhérence.

8. Bobine selon l'une des revendications 1 à 5, dans laquelle les spires (21) sont temporairement jointes par fusion partielle contrôlée du matériau du fil.

9. Bobine selon l'une des revendications 1 à 8, comprenant une pluralité de spires temporairement jointes d'au moins deux fils de coupe (20a, 20b) joints longitudinalement d'une manière séparable.

10. Ensemble de coupe pour une machine de coupe de végétation comme un taille-bordures ou une débroussailleuse, ledit ensemble comprenant au moins une bobine (2) selon l'une des revendications 1 à 9 et une tête de coupe (1) comprenant :
- un corps (10) définissant un évidement interne pour la bobine (2) et prévu avec une ouverture périphérique (12a, 12b) pour l'émergence d'une longueur du fil de coupe séparé de la bobine, et pouvant être entraîné en rotation par un moteur, et
- un mandrin central (13) pour supporter ladite au moins une bobine, ledit mandrin comprenant au moins un agencement (135") adapté pour coopérer avec les rainures (230) de la bobine pour garantir la mise en prise rotative entre le mandrin et la bobine, le mandrin pouvant tourner sélectivement par rapport au corps.

11. Procédé pour fabriquer une bobine (2) de fil de coupe pour une machine de coupe de végétation, **caractérisé en ce qu'**il comprend les étapes suivantes :
- fournir un fil de coupe (20),
- enrouler le fil (20) sur lui-même autour d'un axe afin de former au moins deux spires (21) temporairement jointes et un vide central (22),
- former une pluralité de rainures (230) créant une succession de saillies et d'évidements parallèles audit axe sur la surface de la spire située le plus à l'intérieur faisant face au vide central.

12. Procédé selon la revendication 11, dans lequel l'étape de formation comprend une application de chaleur sur la spire située le plus à l'intérieur de la bobine (2) .

13. Procédé selon la revendication 12, dans lequel l'étape de formation comprend en outre une soudure permanente de la spire située le plus à l'intérieur à une spire adjacente.
